# EUROPEAN PATENT SPECIFICATION

(11) **EP 0 952 111 B1**
(45) Date of publication and mention of the grant of the patent: **05.02.2003**
(21) Application number: 99108085.4
(22) Date of filing: 23.04.1999
(51) Int. Cl.: C01B 31/20, B01D 53/86

(54) **CO2 purification system**
Reinigungsverfahren für CO2
Système de purification de CO2

(30) Priority: 24.04.1998 US 65440
(43) Date of publication of application: 27.10.1999
(73) Proprietor: PRAXAIR TECHNOLOGY, INC., Danbury, CT 06810-5113 (US)
(72) Inventor: Heim, Carl Joseph, Amherst, New York 11228 (US); Gupta, Amitabh, East Amherst, New York 14051 (US)
(74) Representative: Schwan, Gerhard, Dipl.-Ing.

(56) References cited:
- EP-A- 0 698 577
- WO-A-94/12432
- DE-A- 4 305 386
- US-A- 4 830 838
- DATABASE WPI Section Ch, Week 8134 Derwent Publications Ltd., London, GB; Class E36, AN 81-61030D XP002111305 & JP 56 081133 A (MITSUBISHI HEAVY IND CO LTD), 2 July 1981 (1981-07-02)

## Description

### BACKGROUND OF THE INVENTION

The invention relates to a method for the removal of trace amounts of hydrocarbon and sulfur compounds from a carbon dioxide stream. In particular, it relates to a method for the removal of hydrocarbons and sulfur compounds from a carbon dioxide stream through the use of a catalytic oxidation system.

Carbon dioxide is used in various applications, many of which require the carbon dioxide to be free from impurities. However, carbon dioxide obtained from natural sources (e.g., wells), or industrially produced (e.g., by methods such as fermentation or by steam/methane reduction shift for H₂ production), typically contains trace levels of various impurities. Depending on the application, the specification for CO₂ varies from end user to end user. Applications such as the food or beverage industry have stricter specifications on certain contaminant compounds than the levels present in typical raw gas streams.

Accordingly, commercially produced carbon dioxide may contain various impurities which need to be removed in order to obtain a liquid product that will meet end user specifications. Impurities such as reduced sulfur compounds (e.g., hydrogen sulfide, carbonyl sulfide, carbon disulfide, and mercaptans) and certain hydrocarbons (e.g., benzene, acetaldehyde) present significant removal challenges for CO₂ production purification systems, because of the low levels (i.e. ppb) to which these impurities must be removed, and, because of the variability of these impurities in the CO₂ stream.

In addition to CO₂ production purification issues, carbon dioxide end users may own and operate their own CO₂ storage tanks and may receive their carbon dioxide needs from various supply sources. Accordingly, CO₂ purification also presents a challenge for end users who may need to purify their CO₂ supplies to the required purity level, and also provide quality assurance to safeguard against the occasional excursions and/or concentrations of impurities and/or contamination in the delivery chain.

Various purification methods for removing impurities from carbon dioxide are known in the art. In particular, for CO₂ production facilities, two different purification schemes typically are employed. In the first of these, a crude CO₂ stream is compressed and any free (liquid) water removed. The CO₂ then enters a sulfur removal step. In this step, the CO₂ containing reduced sulfur compounds, is brought into contact with metal oxides (e.g., FeO, ZnO, CuO or a mixture of such oxides) where the sulfur compounds react with the metal, forming metal sulfides and water vapor. The metal oxide material gets spent and is replaced on a periodic basis (typically months or years) to ensure sulfur removal. The CO₂ gas stream leaving the sulfur removal step now enters a catalytic oxidation system to remove hydrocarbons. In this system, oxygen (if enough O₂ is not present in the feed) is injected either as air, PSA oxygen or vaporized liquid oxygen and the temperature of the gas stream is increased to approximately 316 to 399°C (600 to 750°F) and passed over a noble metal catalyst (palladium or platinum). The hydrocarbons react with the oxygen forming carbon dioxide and water vapor. The placement of this step is usually after the sulfur removal unit, since the catalyst typically used would be poisoned or fouled by reduced forms of sulfur. The CO₂ gas leaving the catalytic oxidation system is cooled by means of a heat exchanger and any liquid water is removed by means of a water separator. The CO₂ gas stream is introduced into a thermal swing drier where the water vapor is removed. The CO₂ gas stream, now free of impurities, is fed to a CO₂ stripper/liquefier system where the CO₂ is liquefied and separated from the non-condensable impurities (e.g., N₂, O₂ and CH₄).

In a second, typical CO₂ production facility purification scheme, once again a crude CO₂ stream is compressed and any. free (liquid) water removed. The CO₂ then enters a sulfur removal step. In this step, the CO₂, containing reduced sulfur compounds, is brought into contact with metal oxides (e.g., FeO, ZnO, CuO or a mixture of such oxides) where the sulfur compounds react with the metal forming metal sulfides and water vapor. The metal oxide material gets spent and is removed on a periodic basis (typically months or years) to ensure sulfur removal. After sulfur removal, the CO₂ gas steam existing this step is cooled, by means of a heat exchanger, and any free water is removed in a water separator. The CO₂ gas steam is now introduced into an activated carbon bed where the hydrocarbons are removed from the CO₂ by physical adsorption. It should be noted that, at typical conditions, activated carbon is effective at removing heavier hydrocarbons such as benzene, toluene, ethanol, methanol and is not as effective in removing other hydrocarbons (e.g., methane, ethane, propane, butane, acetaldehyde, vinyl chloride and ethylene oxide) to the required specification level. Upon leaving the activated carbon adsorption system the CO₂ gas stream is dried, liquefied and separated from the non-condensables.

For end users operating their own CO₂ storage facilities, a typical carbon dioxide purification scheme involves first introducing the liquid CO₂ stream into an electric heater where it is vaporized and the pressure regulated to the end user supply pressure (2.74 to 11.4 bar (25 to 150 psig)). This gas then flows through a bed of activated carbon where hydrocarbons are removed from the CO₂ by physical adsorption. The CO₂ gas stream enters the end user supply manifold and is delivered to the various use points. Again, it is noted that at typical conditions (∼21°C, 7.91 bar) (∼70°F, 100 psig)), activated carbon is not effective in removing several hydrocarbons (e.g., methane, ethane, propane, butane, acetaldehyde, vinyl chloride, and ethylene oxide) to the required specification level. Hydrogen sulfide and carbonyl sulfide also will not be removed to required product specifications.

Catalytic oxidation processes have been widely used for destroying volatile organic hydrocarbons (VOCs) and odorous compounds in exhaust air streams, while other catalytic oxidation systems, such as Katasulf, North Thames Gas Board, and Soda Iron, processes have been used (historically) to remove hydrogen sulfide and organic sulfur compounds from waste gas streams. For example, U.S. Patent Number 5,061,464 by Cordonna, et al. describes sulfur tolerant platinum group metal catalyst(s) capable of oxidizing sulfur as well as carbon monoxide. Deeba et al. in U.S. Patent No. 5,145,285 described a platinum on a titania or zirconia support which is sulfur resistant. This catalyst reportedly is well adapted for the treatment of vehicular exhaust and exhaust gases from co-generation plants. In the processes described by Cordonna and Deeba et al., the resulting sulfur oxides, carbon dioxide, moisture, nitrogen and oxygen are vented to the atmosphere and no attempt is made to produce a useable product of higher purity by removing the impurities from the base gas.

Matros et al. in U.S. Patent Number 5,658,541 describes a process and apparatus for removal of volatile divalent sulfur compounds from waste gases. In this process volatile organic compounds are also removed (converted to carbon dioxide and water vapor). The resulting sulfur oxides from the combustion process are removed by absorption or adsorption. The remaining waste gases e.g., nitrogen, oxygen, carbon dioxide and water vapor, are vented to the atmosphere.

In addition, in the process described by Matros, sulfites and sulfates are allowed to build up on the catalyst. These salts are periodically removed by raising the temperature of the catalyst bed to a reactivation temperature at which the sulfur salts will decompose to sulfur oxides and be purged from the catalyst bed. This process also employs the use of a regenerative heat exchanger which is composed of a ceramic material located on each side of the catalyst bed. The flow direction through the bed is periodically reversed to recoup the heat adsorbed by the ceramic material. Again, any sulfite or sulfate salts that build up on this material (at low oxidation temperatures) is "burned off" when the bed temperature is increased to the catalyst reactivation temperature.

Document US 4,830,838 relates to a process for purifying a carbon dioxide containing gas stream, for example a geothermal steam or a sour gas stream, comprising a catalytic oxidation step of hydrogen sulfide to sulfur dioxide in a catalytic incinerator, followed by absorption of the generated sulfur dioxide in scrubbers.
Document WO 94/12432 relates to a process for purifying a carbon dioxide containing gas stream wherein in a desulfurization step sulfur compounds are removed, followed by addition of oxygen and catalytic oxidation of hydrocarbons.

There remains a need to provide an effective and efficient method for the removal of trace levels of hydrocarbons and sulfur compounds from a carbon dioxide stream. In particular, there is a need for such a method that is applicable to both carbon dioxide production facilities as well as for on-site CO₂ purification for CO₂ end users.

### SUMMARY OF THE INVENTION

The invention is a method for removal of contaminants from a gaseous carbon dioxide stream as defined in claim 1.

This method effectively removes impurities such as reduced sulfur compounds and most hydrocarbons, and involves the use of a single catalytic oxidation step to oxidize the contaminants and convert them to byproducts which subsequently are removed by adsorption/absorption techniques.

Typical food and beverage grade specifications for carbon dioxide required of CO₂ producers by end users are listed in Table A below.

**TABLE A**

| IMPURITIES | SPECIFICATION |
|---|---|
| Assay (Purity | 99.90% |
| Water | 20 ppm |
| Total Hydrocarbon (as methane) | 20 ppm |
| Unsaturated Hydrocarbon | 5 ppm |
| Oxygen | 30 ppm |
| Nitrogen | 100 ppm |
| Carbon Monoxide | 10 ppm |
| Hydrogen Sulfide | 0.1 ppm |
| Carbonyl Sulfide | 0.3 ppm |
| Sulfur Dioxide | 1 ppm |
| Carbon disulfide | 0.2 ppm |
| Mercaptans | 0.3 ppm |
| Benzene | 0.02 ppm |
| Nitrogen Dioxide & Nitric Oxide | 1 ppm |
| | |
| Ethanol | 10 ppm |
| Methanol | 10 ppm |
| Acetaldehyde | 0.2 ppm |
| | |
| Ethylene Oxide | 1 ppm |
| Vinyl Chloride | 1 ppm |

While hydrocarbons (e.g., benzene and acetaldehyde) are converted to CO₂ by the catalytic oxidation process, the sulfur compounds (e.g., hydrogen sulfide, carbon disulfide, carbonyl sulfide, and mercaptans) present in the CO₂ stream react with oxygen, forming their respective combustion products according to the following reactions reported below in TABLE B:

**TABLE B**

| Sulfur Compound Contaminant | Oxidation Reaction |
|---|---|
| Hydrogen sulfide | 2H₂S + 3O₂ → 2SO₂ + 2H₂O |
| Carbon disulfide | CS₂ + 3O₂ → 2SO₂ + CO₂ |
| Carbonyl sulfide | 2COS + 3O₂ → 2SO₂ + 2CO₂ |
| Mercaptans (e.g., CH₃SH) | CH₂SH + 3O₂ → SO₂ + CO₂ + 2H₂O |

The present invention is an improved method of removing all of the common contaminants to product specification levels such as listed in Table A. The use of a sulfur tolerant oxidation catalyst avoids the requirement of a separate treatment step to reduce sulfur, thereby minimizing capital operating cost (replacement of sulfur gettering material; i.e., metal oxide or potassium permanganate solution). The conversion of all of the sulfur species to sulfur dioxide, as shown in Table B, advantageously increases the allowable concentration of any residual sulfur compound contaminant from 0.1 ppm (as H₂S) to 1 ppm (as SO₂). This increase, an order of magnitude, makes the removal system and subsequent analytical verification a much easier task.

The sulfur tolerant oxidation catalyst of the present invention is is selected from platinum and palladium .

The catalytic oxidation preferably is conducted at a temperature of about 375°C to about 500°C.

The oxidation is carried out at a pressure of about 18.3 to about 23.4 bar (about 250 to about 325 psig).

After the hydrocarbon contaminants and the sulfur compounds are converted to their respective oxides, upon exiting the catalytic oxidizer, the sulfur oxides subsequently are removed from the carbon dioxide stream by absorption (if high concentrations (e.g., about 100 ppm to about 5000 ppm) of sulfur are present) or by adsorption (if the sulfur concentration is low (e.g., about 1 ppm to about 100 ppm)).

### BRIEF DESCRIPTION OF THE DRAWINGS

For further understanding of the present invention, reference should be made to the following detailed description of preferred embodiments taken in conjunction with the accompanying drawings in which like elements have been given like reference numerals, and wherein:
Fig. 1 is a schematic block diagram of a preferred process flow stream for a production facility arrangement wherein sulfur oxides are removed by physical adsorption.
Figure 2 is a schematic block diagram of a preferred process flow stream for a production facility arrangement wherein sulfur oxides are removed by absorption.
Figure 3 is a schematic block diagram of a preferred process flow stream for an end user, on-site application including a residual oxygen chemisorber.
Figure 4 is a schematic block diagram of a preferred process flow stream for an end user, on-site application including low excess oxygen control.
Figure 5 is a schematic block diagram of a preferred process flow stream for an end user, on-site application including a metal oxide sulfur removal step and low excess oxygen control.

### DETAILED DESCRIPTION OF PREFERRED EMBODIMENTS

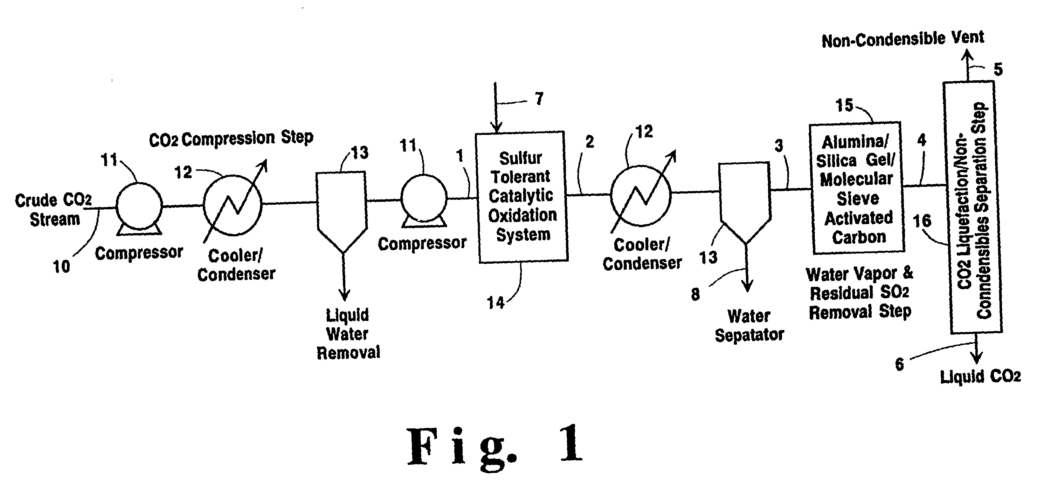

Figure 1 represents a simplified process block flow diagram for a sulfur/hydrocarbon purification system to be used in a carbon dioxide production facility. Crude CO₂ (stream 10) first passes through a compression step (consisting of compressor 11 and condenser 12) and free (liquid) water is removed by separator 13. The CO₂ passes through compressor 11 then (stream 1) enters a catalytic oxidation system 14 to oxidize the hydrocarbons to CO₂, and all of the sulfur species to sulfur dioxide. In this system, oxygen is injected (stream 7) either as air, PSA oxygen or Driox to maintain an excess oxygen concentration of approximately 1000 ppm in the gas stream leaving the catalytic oxidation system (stream 2). The temperature of the gas entering the catalytic reactor is increased to approximately 316 to 482°C (600 to 900°F)and then passed over a sulfur tolerant metal catalyst where the hydrocarbons react with the oxygen, forming carbon dioxide and water. Typically, the temperature of the catalytic bed will be kept below about 427°C (800°F) to minimize the oxidation of methane since this contaminant readily can be removed in the CO₂ liquefaction/stripper system 16. The reduced sulfur species also react with the oxygen forming their respective combustion products.

After leaving the catalytic oxidation system (stream 2), the gas stream is cooled by means of a cooler/condenser 12. Condensed water (stream 8) is removed via a water separator 13. The gas stream (stream 3) now enters a multi-layered bed 15 of adsorbent(s) (i.e., activated carbon and alumina) capable of removing the SO₂ and the water vapor . This adsorber system (thermal swing adsorption) will employ multiple adsorber beds (i.e., 2 to 4) allowing for one or more beds to be adsorbing the SO₂ and H₂O while the other beds are being regenerated with a hot gas stream and/or being cooled prior to the next adsorption cycle.

The gas stream, stream 4, (which now is free of sulfur, hydrocarbon compounds and water) enters the CO₂ liquefier 16 where the non-condensables (e.g., O₂, N₂ and CH₄) are separated by distillation and vented (stream 5) from the liquid CO₂ (stream 6). Table C presents typical stream characteristics (pressure, temperature and composition) for this process.

**TABLE C**

| | | | | | Composition | | | | | |
|---|---|---|---|---|---|---|---|---|---|---|
| Stream No. | bar | Pressure, (psig) | °C | Temp. (°F) | CO₂ (%) | N₂ % | O₂ % | S as H₂S ppm | Total Hydrocarbons as CH₄ ppm | Water % |
| 1 | 22.0 | (305) | 60 | (140) | 97.7 | 1 | 0.2 | 100 | 1000 | 1 |
| 2 | 21.6 | (299) | 127 | (260) | 97.8 | 1 | 0.1 | 100¹ | <20 | 1.1 |
| 3 | 21.6 | (298) | 38 | (100) | 98.6 | 1 | 0.1 | 90¹ | <20 | 0.3 |
| 4 | 21.4 | (296) | 38 | (100) | 98.9 | 1 | 0.1 | <1¹ | <20 | <20ppm |
| 5 | 21.4 | (296) | -18 | (0) | 40 | 54 | 6 | <1¹ | <20 | <20ppm |
| 6 | 21.4 | (296) | -18 | (0) | 99.9 | <60ppm | <30ppm | <1¹ | <20 | <20ppm |
| 7 | 22.4 | (310) | 21 | (70) | -- | 79 | 21 | -- | -- | -- |
| 8 | 1.0 | (14.7) | 38 | (100) | -- | -- | -- | -- | -- | 99.9 |

| | | | | | | | | | | |
|---|---|---|---|---|---|---|---|---|---|---|
| ¹S containing species have been oxidized to SO₂ | | | | | | | | | | |

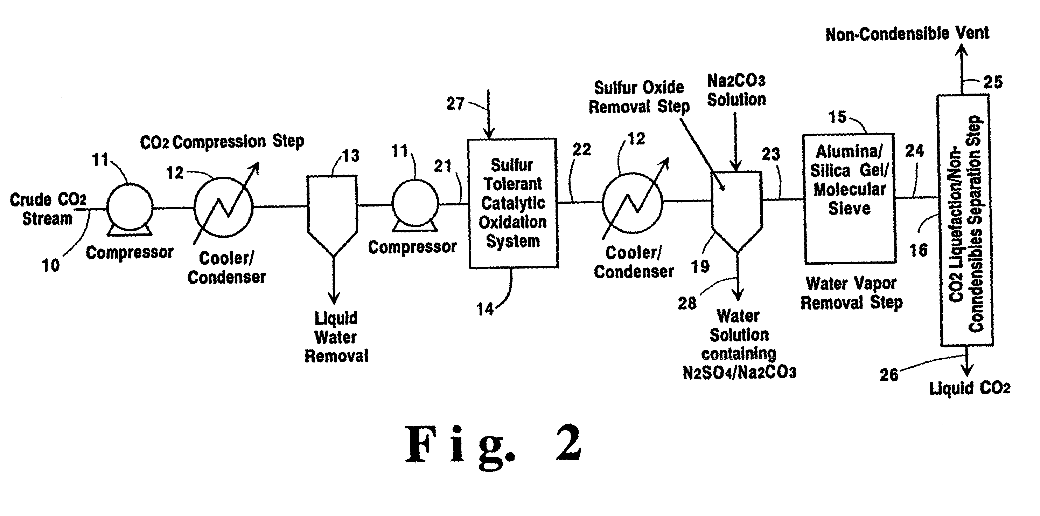

Figure 2 presents a simplified flow diagram of a sulfur/hydrocarbon purification system to be used in a carbon dioxide production facility if absorption is chosen as the sulfur oxides removal step. The system is similar to the one depicted in Figure I (and described previously) with one exception. In this mode the CO₂ stream (stream 22), after leaving the catalytic oxidation system, is cooled by means of a heat exchanger and enters a scrubber 19. The CO₂ gas is brought into contact with a water solution containing sodium carbonate. The sulfur oxides will be absorbed into this solution and be converted to water soluble sodium sulfate, thereby removing the sulfur oxides from the CO₂ (stream 8). The CO₂ gas stream (stream 23) leaving the absorption step is fed to a standard thermal swing drier 15 (using adsorbents such as alumina, silica gel, or molecular sieve) which removes the moisture. The remainder of the process is the same as presented in Figure 1 (and described above).

Table D presents typical stream characteristics (pressure temperature and composition for this option) and Table E lists the specific contaminants with their respective inlet and required product concentrations.

**TABLE D**

| Stream No. | bar | Pressure (psig) | °C | Temp (°F) | CO2 % | N2 % | O2 % | S as H₂S ppm | Total hydroca rbons as CH₄ ppm | Water % |
|---|---|---|---|---|---|---|---|---|---|---|
| | | | | | | | | | | |
| 21 | 22.0 | (305) | 60 | (140) | 97.7 | 1 | 0.2 | 100 | 1000 | 1 |
| 22 | 21.6 | (299) | 127 | (260) | 97.8 | 1 | 0.1 | 100¹ | <20 | 1.1 |
| 23 | 21.6 | (298) | 38 | (100) | 98.6 | 1 | 0.1 | 90¹ | <20 | 0.3 |
| 24 | 21.4 | (296) | 38 | (100) | 98.9 | 1 | 0.1 | <1¹ | <20 | <20ppm |
| 25 | 21.4 | (296) | -18 | (0) | 40 | 54 | 6 | <1¹ | <20 | <20ppm |
| 26 | 21.4 | (296) | -18 | (0) | 99.9 | <60ppm | <30ppm | <1¹ | <20 | <20ppm |
| 27 | 22.4 | (310) | 21 | (70) | -- | 79 | 21 | -- | -- | -- |
| 28 | 1.0 | (14.7) | 38 | (100) | Contains Na₂CO₃ and Na₂SO₄ dissolved salts | | | | | 99.9 |

| | | | | | | | | | | |
|---|---|---|---|---|---|---|---|---|---|---|
| ¹S containing species have been oxidized to SO₂ | | | | | | | | | | |

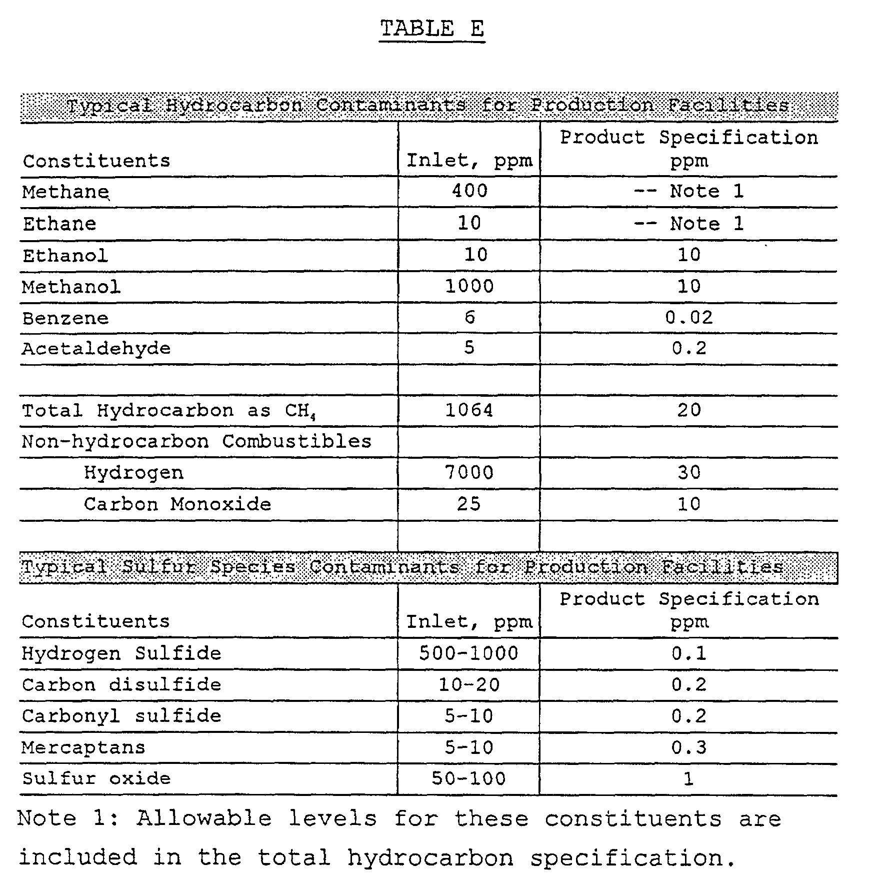

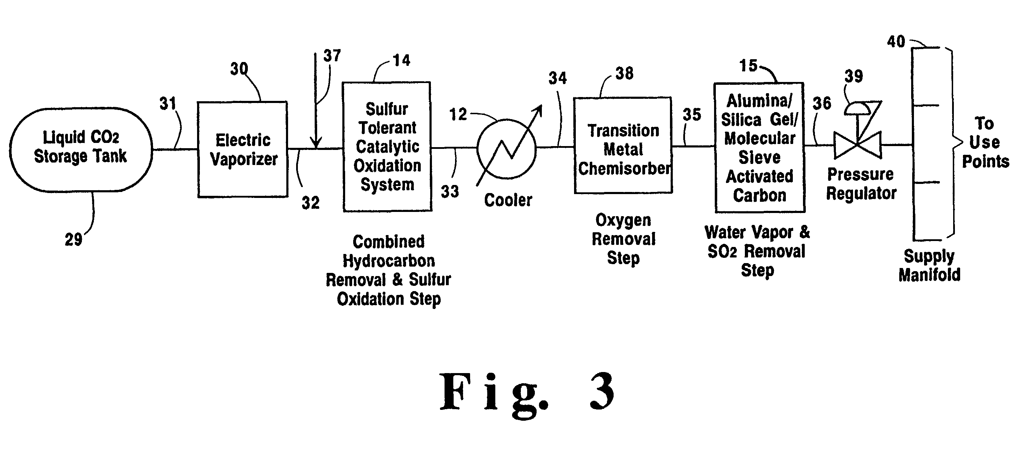

Figure 3 depicts a simplified flow diagram of a sulfur/hydrocarbon purification system to be used by an end-user as an on-site application. In Figure 3, the liquid CO₂ (stream 31) is vaporized by an electric vaporizer 30. The resulting vapor stream (stream 32) is introduced into the catalytic oxidation system 14 where the hydrocarbons and sulfur species are oxidized in the same manner as was previously described above, with one exception. In the on-site purification system, approximately 100% oxygen (cylinder or vaporized liquid oxygen ) will be used as the source of the oxygen (stream 37). This is necessary since an on-site purification system will not have a liquefication/non-condensable separation system to remove the nitrogen introduced if air was used. The gas stream leaving the catalytic oxidation system (stream 33) will be cooled in condenser 12 and be directed (stream 34) to an adsorber vessel 38 where the excess oxygen is chemisorbed by a bed of transition metal adsorbent (i.e., Cu or Ni). This bed will require periodic regeneration which may or may not be performed on-site. Regeneration can be accomplished by heating the adsorbent to approximately 204°C (400°F) after which a 5% H₂ in CO₂ stream is introduced to react with the adsorbed oxygen. The bed then is cooled down and put back into service. Alternatively, once this adsorbent is spent, it can be replaced with fresh material, thereby not requiring regeneration.

The CO₂ gas stream leaving the chemisorber (stream 35) now flows into a multi-layer bed 15 of adsorbent(s) (e.g., activated carbon and alumina) capable of removing the SO₂ and the water vapor. This bed may or may not be regenerated on-site and the regeneration procedure is the same as previously described in the CO₂ production facility section.

The CO₂ gas leaving the adsorber (stream 36), now free of hydrocarbons, sulfur compounds and water and is regulated (by regulator 39) to the pressure of end user supply manifold 40 to be delivered to the various use points. Table F presents the stream characteristics for this embodiment.

**TABLE F**

| | | | | | Composition | | | | | |
|---|---|---|---|---|---|---|---|---|---|---|
| Stream No. | bar | Pressure, (psig) | °C | Temp. (°F) | CO₂ (%) | N₂ ppm | O₂ ppm | S as H₂S ppm | Total Hydrocarbons as CH₄ ppm | Water ppm |
| 31 | 21.7 | (300) | -18 | 0 | 99.9 | <60 | <30 | 0.1-10 | 1-100 | <20 |
| 32 | 21.7 | (300) | 21 | 70 | 99.9 | <60 | 100-500 | 0.1-10 | 1-100 | <20 |
| 33 | 21.5 | (297) | 143 | 290 | 99.9 | <60 | 100-500 | 0.1-10¹ | <1 | 20-200 |
| 34 | 21.4 | (296) | 38 | 100 | 99.9 | <60 | 100-500 | 0.1-10¹ | <1 | 20-200 |
| 35 | 21.4 | (295) | 38 | 100 | 99.9 | <60 | 100-500 | 0.1-10¹ | <1 | 200 |
| 36 | 21.3 | (294) | 38 | 100 | 99.9 | <60 | <30 | <1¹ | <1 | <20 |
| 37 | 23.4 | (325) | 21 | 70 | -- | -- | 100% | -- | -- | -- |

| | | | | | | | | | | |
|---|---|---|---|---|---|---|---|---|---|---|
| ¹S containing species have been oxidized to SO₂, | | | | | | | | | | |

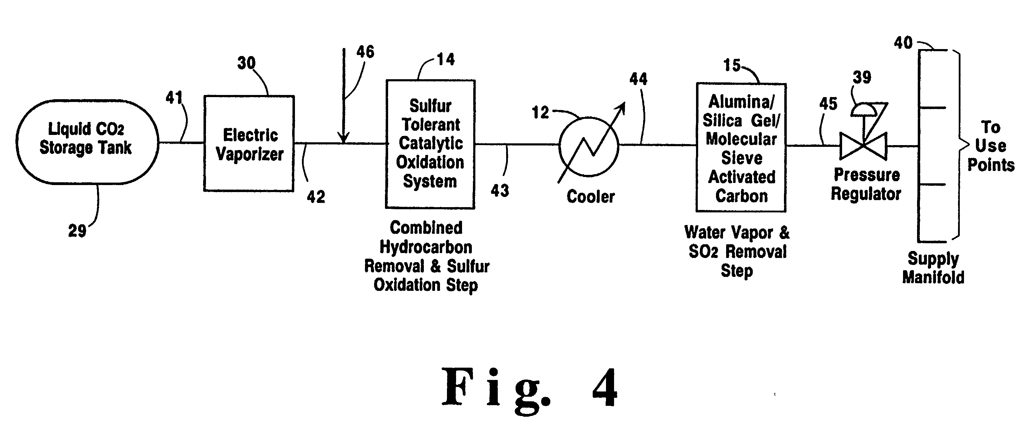

Figure 4 represents a process scheme similar to that described above in reference to Figure 3, with two exceptions. In this embodiment, the excess oxygen leaving the catalytic oxidation system is controlled to less than 30 ppm. By using this "tight" control option there is no need to include a transition metal oxygen chemisorber, since the oxygen is maintained within the product specification. Table G presents typical stream characteristics for this embodiment.

**TABLE G**

| Stream No. | bar | Pressure (psig) | °C | Temp (°F) | C02 % | N2 ppm | 02 ppm | S as H₂S ppm | Total hydroca rbons as CH₄ ppm | Water % |
|---|---|---|---|---|---|---|---|---|---|---|
| 41 | 21.7 | (300) | -18 | (0) | 99.9 | <60 | <30 | 0.1-10 | 1-100 | <20 |
| 42 | 21.7 | (300) | 21 | (70) | 99.9 | <60 | 100-500 | 0.1-10 | 1-100 | <20 |
| 43 | 21.5 | (297) | 143 | (290) | 99.9 | <60 | <30 | 0.1-10¹ | <1 | 20-200 |
| 44 | 21.4 | (296) | 38 | (100) | 99.9 | <60 | <30 | 0.1-10¹ | <1 | 20-200 |
| 45 | 21.4 | (295) | 38 | (100) | 99.9 | <60 | <30 | <1¹ | <1 | 200 |
| 46 | 23.4 | (325) | 21 | (70) | -- | -- | 100% | -- | -- | -- |

| | | | | | | | | | | |
|---|---|---|---|---|---|---|---|---|---|---|
| ¹S containing species nave been oxidized to SO₂ | | | | | | | | | | |

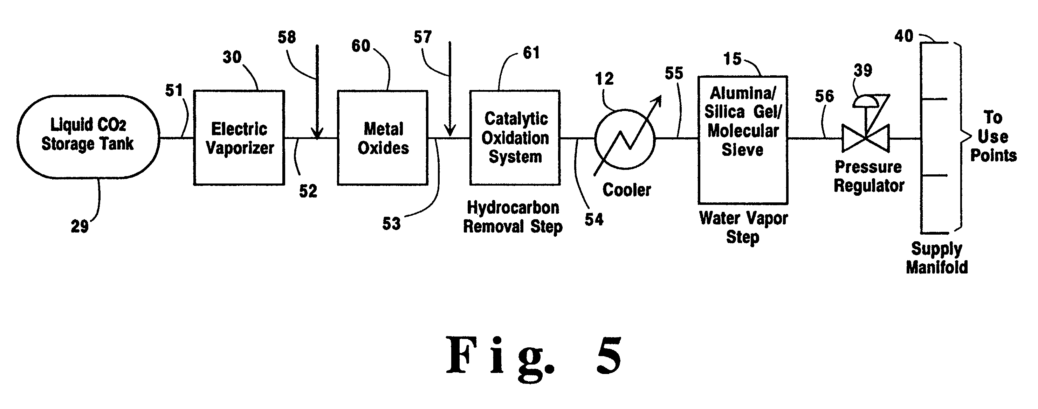

The system shown in Figure 5 is not an embodiment of the present invention and employs the use of a mixed metal oxide adsorber bed 60 (zinc or copper oxides) to which a layer of a hydrolysis catalyst (alumina) may be added to promote the conversion of carbonyl sulfide to hydrogen sulfide. The CO₂ liquid (stream 51) is vaporized by means of an electric vaporizer 30 and the resulting CO₂ gas (stream 52) is fed to mixed oxide adsorber 60. Water (stream 58) is added to the CO₂ just prior to entering the adsorber to provide the moisture needed for the hydrolysis of any carbonyl sulfide that may be present. The hydrogen sulfide reacts with the metal oxides to form stable metal sulfides and water vapor. The CO₂ leaving this step (stream 53) is injected with oxygen (stream 57) and fed to a catalytic oxidation system 61 where the hydrocarbons are oxidized in the same manner as was previously described above in reference to Figure 3. In this embodiment, the catalyst does not have to be sulfur tolerant since the sulfur is removed prior to the catalytic oxidant step. In this embodiment, the excess oxygen can be either controlled to less than 30 ppm (as shown in Figures 4 and 5) or removed through chemisorption (as shown in Figure 3). The gas stream leaving the catalytic oxidation system (stream 54) will be cooled by condenser 12 and directed (stream 55) to an adsorption desiccant dryer system 15 containing either alumina, silica gel or molecular sieves, wherein water vapor is removed. This bed may or may not be regenerated on-site and the regeneration procedure is the same as previously described in the CO₂ production facility section.

The resulting CO₂ gas stream (stream 56) now is essentially free of hydrocarbons, sulfur compounds, and water. The CO₂ gas stream is regulated (by regulator 39) to the pressure of supply manifold 40 and delivered to the end user's use point.

Table H presents typical stream characteristics for this embodiment, and Table I lists the hydrocarbon and sulfur species contaminants typically encountered by end users, as well as the product specifications for liquid CO₂.

**TABLE H**

| Stream Characteristics | | | | | | | | | | |
|---|---|---|---|---|---|---|---|---|---|---|
| Stream No. | bar | Pressure, (psig) | °C | Temp. (°F) | CO₂ (%) | N₂ ppm | O₂ ppm | S as H₂S ppm | Total Hydrocarbons as CH₄ ppm | Water ppm |
| 51 | 21.7 | (300) | -18 | (0) | 99.9 | <60 | <30 | 0.1-10 | 1-100 | <20 |
| 52 | 21.7 | (300) | 21 | (70) | 99.9 | <60 | <30 | 0.1-10 | 1-100 | 20-50 |
| 53 | 21.6 | (299) | 21 | (70) | 99.9 | <60 | 100-500 | 0.1 | 1-100 | 20-50 |
| 54 | 21.4 | (296) | 143 | (290) | 99.9 | <60 | <30 | 0.1 ² | <1 | 20-250 |
| 55 | 21.4 | (295) | 38 | (100) | 99.9 | <60 | <30 | 0.1 ² | <1 | 20-250 |
| 56 | 21.3 | (294) | 38 | (100) | 99.9 | <60 | <30 | 0.1 ² | <1 | <20 |
| 57 | 23.4 | (325) | 21 | (70) | -- | -- | 100% | -- | -- | -- |
| 58 | 23.4 | (325) | 21 | (70) | -- | -- | -- | -- | -- | 100% |

| | | | | | | | | | | |
|---|---|---|---|---|---|---|---|---|---|---|
| ²S containing species have been oxidized to SO₂ | | | | | | | | | | |

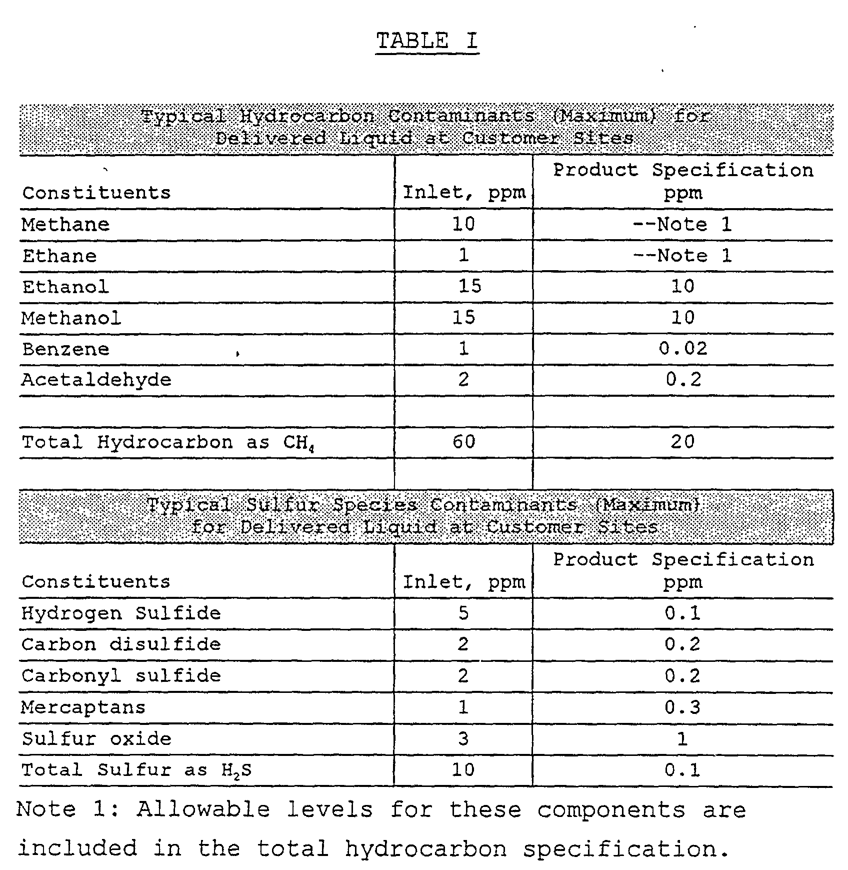

Various other modifications of the disclosed embodiments, as well as other embodiments of the invention, will be apparent to those skilled in the art upon reference to this description, or may be made without departing from the spirit and scope of the invention defined in the appended claims.

## Claims

1. A method for removal of contaminants from a gaseous carbon dioxide stream comprising:
contacting the carbon dioxide stream with a metal oxidation catalyst selected from platinum and palladium at a temperature ranging from about 375°C to about 500°C, and at a pressure ranging from about 18.25 bar (250 psig) to about 23.42 bar (325 psig) in order to convert hydrocarbons and sulfur compounds to their respective oxides;
removing the sulfur oxides and moisture by adsorption or absorption techniques; and,
recovery of the carbon dioxide product.

2. The method of claim 1 comprising contacting the carbon dioxide stream having a sulfur content of about 100 to about 5000 ppm after catalytic oxidation with absorbents capable of removing sulfur dioxide and adsorbents capable of removing moisture from the stream.

3. The method of claim 1 comprising contacting the carbon dioxide stream having a sulfur content of about 1 to about 100 ppm after catalytic oxidation with adsorbents capable of removing sulfur dioxide and moisture from the stream.

4. The method of claim 1 comprising introducing oxygen into the carbon dioxide stream to facilitate oxidation of the hydrocarbons and sulfur compounds and to maintain an excess oxygen concentration in the carbon dioxide stream after catalytic oxidation.

## Patentansprüche

1. Verfahren zum Entfernen von Verunreinigungen aus einem gasförmigen Kohlendioxidstrom, wobei im Zuge des Verfahrens
der Kohlendioxidstrom mit einem Metalloxidationskatalysator, der aus einer aus Platin und Palladium bestehenden Gruppe ausgewählt ist, bei einer Temperatur im Bereich von etwa 375 °C bis etwa 500 °C und bei einem Druck von etwa 18,25 bar (250 psig) bis etwa 23,42 bar (325 psig) in Kontakt gebracht wird, um Kohlenwasserstoffe und Schwefelverbindungen in ihre jeweiligen Oxide umzuwandeln;
die Schwefeloxide und Feuchtigkeit mittels Adsorptions- oder Absorptionstechniken entfernt werden; und
das Kohlendioxidprodukt gewonnen wird.

2. Verfahren nach Anspruch 1, wobei der Kohlendioxidstrom, der einen Schwefelgehalt von etwa 100 bis etwa 5000 ppm aufweist, nach der katalytischen Oxidation mit Absorptionsmitteln, die in der Lage sind, Schwefeldioxid zu entfernen, und mit Adsorptionsmitteln, die in der Lage sind, Feuchtigkeit von dem Strom zu entfernen, in Kontakt gebracht wird.

3. Verfahren nach Anspruch 1, wobei der Kohlendioxidstrom, der einen Schwefelgehalt von etwa 1 bis etwa 100 ppm aufweist, nach der katalytischen Oxidation mit Adsorptionsmitteln in Kontakt gebracht wird, die in der Lage sind, Schwefeldioxid und Feuchtigkeit aus dem Strom zu entfernen.

4. Verfahren nach Anspruch 1, wobei Sauerstoff in den Kohlendioxidstrom eingebracht wird, um die Oxidation der Kohlenwasserstoffe und Schwefelverbindungen zu erleichtern und eine Überschuss-Sauerstoffkonzentration in dem Kohlendioxidstrom nach katalytischer Oxidation aufrecht zu erhalten.

## Revendications

1. Procédé pour éliminer les contaminants d'un courant de dioxyde de carbone gazeux, comprenant les étapes consistant:
à mettre en contact le courant de dioxyde de carbone avec un catalyseur métallique d'oxydation choisi entre le platine et le palladium à une température comprise dans l'intervalle d'environ 375°C à environ 500°C, et à une pression comprise dans l'intervalle d'environ 18,25 bars (250 psig) à environ 23,42 bars (325 psig) afin de convertir les hydrocarbures et composés soufrés en leurs oxydes respectifs;
à éliminer les oxydes de soufre et l'humidité par des techniques d'adsorption ou d'absorption; et
à recueillir le produit consistant en dioxyde de carbone.

2. Procédé suivant la revendication 1, comprenant la mise en contact du courant de dioxyde de carbone ayant une teneur en soufre d'environ 100 à environ 5000 ppm après oxydation catalytique avec des absorbants capables d'éliminer le dioxyde de soufre et des adsorbants capables d'éliminer l'humidité du courant.

3. Procédé suivant la revendication 1, comprenant la mise en contact du courant de dioxyde de carbone ayant une teneur en soufre d'environ 1 à environ 100 ppm après oxydation catalytique avec des adsorbants capables d'éliminer le dioxyde de soufre et l'humidité du courant.

4. Procédé suivant la revendication 1, comprenant l'introduction d'oxygène dans le courant de dioxyde de carbone pour faciliter l'oxydation des hydrocarbures et composés soufrés et pour maintenir une concentration d'oxygène en excès dans le courant de dioxyde de carbone après l'oxydation catalytique.
